Europäisches Patentamt

(19) European Patent Office

Office européen des brevets

(11) Veröffentlichungsnummer: **0 221 247**
**B1**

(12) **EUROPÄISCHE PATENTSCHRIFT**

(45) Veröffentlichungstag der Patentschrift: **26.09.90**

(51) Int. Cl.⁵: **H 02 P 7/628**

(21) Anmeldenummer: **86110270.5**

(22) Anmeldetag: **25.07.86**

(54) **Asynchronmaschinenantrieb.**

(30) Priorität: **27.09.85 CH 4201/85**

(43) Veröffentlichungstag der Anmeldung:
**13.05.87 Patentblatt 87/20**

(45) Bekanntmachung des Hinweises auf die
Patenterteilung:
**26.09.90 Patentblatt 90/39**

(84) Benannte Vertragsstaaten:
**CH DE FR IT LI SE**

(56) Entgegenhaltungen:
**EP-A-0 120 365**
**DE-A-2 244 757**

**PATENTS ABSTRACTS OF JAPAN, Band 6, Nr.**
**42 (E-98)920r, 16. März 1982; & JP-A-56 159 990**
**(MITSUBISHI DENKI K.K.) 09-12-1981**

(73) Patentinhaber: **BBC Brown Boveri AG**
**Haselstrasse**
**CH-5401 Baden (CH)**

(72) Erfinder: **Zürcher, Urs**
**Allmendstrasse 32**
**CH-5300 Turgi (CH)**

Courier Press, Leamington Spa, England.

# EP 0 221 247 B1

## Beschreibung

Bei der Erfindung wird ausgegangen von einer Betriebsschaltung für eine Drehstrommaschine nach dem Oberbegriff des Patentanspruchs 1.

Mit diesem Oberbegriff nimmt die Erfindung auf einen Stand der Technik von Betriebsschaltungen für Drehstrommaschinen Bezug, wie er aus der DE—A—2 244 757 bekannt ist. Dort ist ein Verfahren zur Steuerung und Regelung eines Schwingkreisumrichters mit natürlicher Kommutierung zur Speisung von Hysteresemotoren angegeben, welche mit konstantem Drehmoment hochlaufen und anschliessend synchron weiterlaufen können. Der Schwingkreisumrichter ist über einen Gleichstromzwischenkreis mit einem netzgeführten Stromrichter verbunden. Der Blindleistungsbedarf des Motors wird durch Kondensatoren, welche die Motoren zu Schwingkreisen ergänzen, zur Verfügung gestellt. Dabei sind Parallel- und Reihenkompensation möglich. Die für die Kommutierung des Schwingkreisumrichters erforderliche Kompensationskapazität ist, zur Vermeidung einer möglichen Übererregung der Hysteresemotoren, in eine jedem Motor zugeordnete Grundkompensation und eine zentrale Restkompensation am Umrichterausgang aufgeteilt.

Nachteilig dabei ist, dass für jeden Motor mehrere Kondensatoren zur Grundkompensation erforderlich sind.

Aus der Schweizer Firmenzeitschrift: Brown Boveri Mitteilungen 9/10 (1974) S. 440—447 ist es bekannt, den Stator einer erregten Synchronmaschine direkt von einem statischen Frequenzumrichter mit Gleichstromzwischenkreis und natürlicher Kommutierung des Wechselrichters drehzahlvariabel zu speisen. Die für die Kommutierung der Thyristoren des Wechselrichters erforderliche Blindleistung wird dabei von der Synchronmaschine geliefert. Das Anfahren der z.B. für Pumpspeicherwerke, Phasenschieber und Gasturbogruppen verwendeten Synchronmaschine erfolgt im Feldschwächbetrieb. Synchronmaschinen sind jedoch aufwendiger und teurer als Asynchronmaschinen. Asynchronmaschinen, die auch für explosionsgeschützte Anwendungsfälle geeignet sind, können Blindleistung nur aufnehmen, aber nicht abgeben.

Die Erfindung wie sie im Patentanspruch 1 definiert ist, löst die Aufgabe, eine einfache Betriebsschaltung für eine Asynchronmaschine anzugeben, bei der eine einfache Stromrichterschaltung mit natürlicher Kommutierung eingesetzt werden kann, wie sie für den Betrieb von Synchronmaschinen verwendet wird.

Ein Vorteil der Erfindung besteht darin, dass je Phase eines Maschinendrehstroms nur 2 relativ kleine Kondensatoren zur Erzeugung einer kapazitiven Impedanz der Gesamtlast benötigt werden. Mit einem geringen Aufwand an zusätzlichen Bauelementen kann eine Synchronmaschine durch eine Asynchronmaschine ersetzt werden. Vorteile der Asynchronmaschine gegenüber der Synchronmaschine sind: grössere Robustheit der Antriebsmaschine, kleineres Leistungsgewicht und Leistungsvolumen, kleineres Trägheitsmoment des Rotors, Wartungsfreiheit durch Wegfall des Kommutators.

Zum Betrieb von Asynchronmaschinen wurden bisher Spannungsumrichter (Umrichter mit Gleichspannungszwischenkreis) oder selbstgeführte Stromrichter mit Gleichstrom-Zwischenkreis und Phasenfolgelöschung, siehe die deutsche Firmenzeitschrift BBC-Nachrichten 11 (1978) S. 485—492, oder direkte Umrichter, insbesondere Steuerumrichter, verwendet.

Die erfindungsgemässe Schaltung erlaubt den Betrieb von Asynchronmaschinen am einfachsten Stromrichter, mit Hilfe geeignet geschalteter Kondensatoren, für Ventilatoren, Pumpen usw. Ein weiterer Vorteil besteht darin, dass die zur Kommutierung verwendeten Serie und Parallelkondensatoren vergleichsweise geringeren Spannungsbelastungen ausgesetzt sind als die Kondensatoren bei einem selbstgeführten Umrichter. Das Saugkreisfilter bringt zusammen mit der Asynchronmaschine bei normaler Auslegung keine Resonanzen, da die Asynchronmaschine relativ stark gedämpft ist.

Die Erfindung wird nachstehend anhand eines Ausführungsbeispiels erläutert. Es zeigen:

Fig. 1 eine Betriebsschaltung einer von einem Umrichter gespeisten Asynchronmaschine mit Serie- und Filterkondensatoren,

Fig. 2 ein Lastimpedanz-Frequenzdiagramm zur Erläuterung der Wirkung der Kondensatoren in der Betriebsschaltung gemäss Fig. 1 und

Fig. 3 ein Drehmoment-Frequenzdiagramm mit und ohne Saugkreise gemäss Fig. 1.

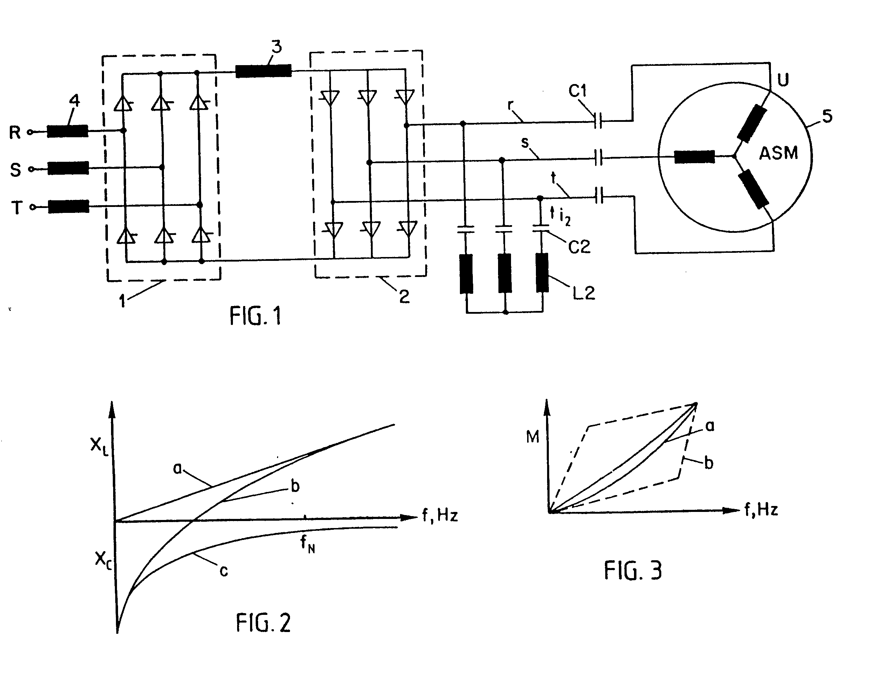

Ein in Fig. 1 dargestellter statischer Frequenzumrichter mit Gleichstromzwischenkreis weist einen netzgeführten Gleichrichter 1, einen lastgeführten Wechselrichter 2 und eine Zwischenkreisdrossel 3 im Gleichstromzwischenkreis auf. Gleich- und Wechselrichter 1 und 2 enthalten Drehstrombrückenschaltungen mit Thyristoren in den Brückenzweigen, die 6pulsig gesteuert sind. Die drei Wechselstromeingänge des Gleichrichters 1 sind über je eine Netzdrossel 4 mit je einem Phasenleiter R, S, T eines Drehstromnetzes verbunden. Die drei Wechselstromeingänge des Wechselrichters 2 sind je über Drehstromleitungen r, s, t und Seriekondensatoren C1 an je eine Statorwicklung einer Asynchronmaschine (ASM) 5 mit Kurzschlussläufer angeschlossen. Die drei Statorwicklungen der Asynchronmaschine 5 sind in Stern geschaltet; sie könnten aber auch in Dreieck geschaltet sein.

Die unmittelbar an die Drehstromausgänge des Wechselrichters 2 angeschlossenen Drehstromleitungen r, s, t sind pro Phase des Maschinen-Drehstroms an einen Saugkreis aus einer Reihenschaltung eines Filterkondensators C2 und einer Filterdrossel L2 angeschlossen. Die drei Saugkreise sind in Stern geschaltet und hinsichtlich ihrer Bauelemente gleich dimensioniert. Das gilt auch für die drei

2

Seriekondensatoren, die mit drei Statorwicklungen in Reihe geschaltet sind und somit selbst Saugkreise darstellen, die zu den drei Saugkreisen aus Filterkondensator C2 und Filterdrossel L2 parallelgeschaltet sind. Als Filterkondensatoren C2 werden vorzugsweise sogenannte verdrosselte Kondensatoren verwendet, so dass besondere Filterdrosseln L2 entfallen.

Die Bemessung der Kondensatoren C1 und C2 geschieht so, dass diese möglichst klein bleiben und dass gleichzeitig die Impedanz der Gesamtlast—ASM 5 und Kondensatoren C1 und C2—immer kapazitiv bleibt. Der induktive Blindwiderstand $X_L$ der Last ist vorzugsweise kleiner als 20% der Bezugsimpedanz $X_B$, mit

$$X_B = \frac{U_N}{i_N \cdot 2\pi \cdot f_N},$$

$U_N$=Phasennennspannung, $i_N$=Nennstrom, $f_N$=Nennfrequenz.

Ohne Serie und Filterkondensatoren wäre die Impedanz der Last (ASM 5) induktiv, vgl. Fig. 2, Kurve a. In Fig. 2 ist auf der Ordinate die Lastimpedanz in willkürlichen Einheiten und auf der Abszisse die Frequenz f in Hertz aufgetragen.

Mit Serie- aber ohne Filterkondensatoren wäre die Impedanz der Last bis etwa 40% der Nennfrequenz $f_N$ der ASM 5 kapazitiv und bei höheren Frequenzen induktiv, vgl. Fig. 2, Kurve b.

Mit Serie und Filterkondensatoren C1 und C2 bleibt die Impedanz der Last im gesamten Frequenzbereich der Asynchronmaschine 5 kapazitiv, vgl. Fig. 2, Kurve c.

Ohne die durch C2 und L2 gebildeten Saugkreise ist das Drehmoment M der Asynchronmaschine in Abhängigkeit von der Frequenz f nur in einem schmalen Bereich mittels eines nicht dargestellten Stromreglers regelbar, vgl. Fig. 3, die ausgezogene Kurve a. Mit Saugkreisen aus C2 und L2 erreicht man für M einen grösseren Regelbereich, wie es im Prinzip in Fig. 3 durch die gestrichelte Kurve b dargestellt ist.

Im Drehzahl- bzw. Frequenzbereich von 0—10% der Nennfrequenz $f_N$ wird die Asynchronmaschine 5 wie ein Stromrichtermotor angefahren, d.h. mit Pulsbetrieb, vgl. die o.g. Brown Boveri Mitteilungen 9/10 (1974) S. 440—447. Für Frequenzen zwischen ca. 10%—25% von $f_N$ wird vorzugsweise im Feldschwächbetrieb gefahren. Für Frequenzen >25% von $f_N$ gilt Vollfeldbetrieb.

Die erfindungsgemässe Betriebsschaltung eignet sich nicht für zu hohe Losbrechmomente, aber sehr gut für den grossen Markt der Ventilator- und Pumpenantriebe.

Nachstehend sind zwei Bemessungsbeispiele für die Kondensatoren C1 und C2 für eine 3phasige Asynchronmaschine 5 angegeben.

Beispiel 1:

| | |
|---|---|
| Magnetisierungsstrom der ASM 5 | $I_\mu$=300 A |
| Phasenspannung | U=1 kV |
| maximaler Saugkreisfilterstrom | $i_2$=1 kA |

Streureaktanz der ASM 5 (primär- und sekundärseitig):
$X_{\sigma 1}+X_{\sigma 2}$=0,2 Ω bei f=50 Hz,
Reaktanz eines Seriekondensators C1:
$X_{C1}$=0,8 Ω bei f=50 Hz,
Kapazität des Seriekondensators C1:
$C1 = 1/(2\pi \cdot f \cdot X_{C1}) \approx 4$ mF,
Reaktanz eines Filterkondensators C2:
$X_{C2}$=1 kV/(0,3 · 1 kA)=3,3 Ω, 0,3=Optimierungsansatz,
Kapazität des Filterkondensators C2:
C2≈1 mF.

Beispiel 2:

Wie Beispiel 1, jedoch:
Phasenspannung U=380 V
$C1 = 4$ mF $\cdot$ (1 kV/380 V)$^2$=27,7 mF
C2=7 mF.

Fur eine Spannung von 380 V erhält man in Abhängigkeit der Scheinleistung S der Asynchronmaschine 5:

C1/S=28 mF/3 MVA=9,3 µF/kVA und C2/S≈2,3 µF/kVA.

Vorzugsweise soll die Kapazität des Seriekondensators C1 im Bereich von 4 · S µF bis 18 · S µF insbesondere, im Bereich von 8 · S µF liegen bis 11 · S µF, bezogen auf eine Spannung von 380 V, S=Scheinleistung der Antriebsmaschine in kVA.

# EP 0 221 247 B1

Vorzugsweise wird die Kapazität des Filterkondensators C2 kleiner als die Kapazität des Seriekondensators C1 gewählt.

Die Kapazität des Filterkondensators C2 soll vorzugsweise im Bereich von $0,5 \cdot S$ µF bis $7 \cdot S$ µF liegen, insbesondere im Bereich von $1,5 \cdot S$ µF bis $3,5 \cdot S$ µF, bezogen auf eine Spannung von 380 V.

## Patentansprüche

1. Betriebsschaltung für eine Drehstrommaschine (5).
   a) mit einem Stromrichter (1, 2, 3)
   b) mit natürlicher Kommutierung,
   c) welcher Stromrichter ausgangsseitig über mindestens eine Drehstromleitung (r, s, t) und über mindestens einen Seriekondensator (C1) je Phase eines Maschinendrehstroms mit der Drehstrommaschine in Wirkverbindung steht, dadurch gekennzeichnet,
   d) dass die Drehstrommaschine eine Asynchronmaschine (5) ist,
   e) dass je Phase des Maschinendrehstroms mindestens ein Filterkondensator (C2) vorgesehen ist, der mit der Drehstromleitung (r, s, t) zwischen dem Seriekondensator (C1) und dem Ausgang des Stromrichters (1, 2, 3) in Wirkverbindung steht,
   f) dass der Filterkondensator (C2) ein verdrosselter Kondensator oder mit einer Filterdrossel (L2) in Reihe geschaltet ist und
   g) dass diese so gebildeten Saugkreise je Phase des Maschinen-Drehstroms mit ihrem nicht mit der Drehstromleitung (r, s, t) in Verbindung stehenden Ende miteinander in Wirkverbindung stehen.

2. Betriebsschaltung nach Anspruch 1, dadurch gekennzeichnet, dass die induktive Komponente der Gesamt-Reaktanz bei Nennfrequenz $(f_N) < 20\%$ der Bezugsimpedanz $(X_B)$ ist.

3. Betriebsschaltung nach einem der Ansprüche 1 oder 2, dadurch gekennzeichnet,
   a) dass die Kapazität des Seriekondensators (C1) im Bereich von $4 \cdot S$ µF bis $18 \cdot S$ µF,
   b) insbesondere, im Bereich von $8 \cdot S$ µF bis $11 \cdot S$ µF liegt, bezogen auf eine Spannung von 380 V, S=Scheinleistung der Antriebsmaschine in kVA.

4. Betriebsschaltung nach einem der Ansprüche 1 bis 3, dadurch gekennzeichnet, dass die Kapazität des Filterkondensators (C2) kleiner als die Kapazität des Seriekondensators (C1) ist.

5. Betriebsschaltung nach Anspruch 4, dadurch gekennzeichnet,
   a) dass die Kapazität des Filterkondensators (C2) im Bereich von $0,5 \cdot S$ µF bis $7 \cdot S$ µF,
   b) insbesondere, im Bereich von $1,5 \cdot S$ µF bis $3,5 \cdot S$ µF liegt, bezogen auf eine Spannung von 380 V, S=Scheinleistung der Antriebsmaschine in kVA.

## Revendications

1. Connexion de régime pour une machine à courant triphasé (5),
   a) avec un convertisseur de courant (1, 2, 3),
   b) à commutation naturelle,
   c) lequel convertisseur de courant est activement raccordé, à sa sortie, à la machine à courant triphasé par au moins un conducteur triphasé (r, s, t) et par au moins un condensateur en série (C1) par phase du courant triphasé de la machine, caractérisée en ce que
   d) la machine à courant triphasé est une machine asynchrone (5);
   e) par phase du courant triphasé de la machine, il est prévu au moins un condensateur de filtrage (C2) qui est activement raccordé au conducteur triphasé (r, s, t) entre le condensateur en série (C1) et la sortie du convertisseur de courant (1, 2, 3);
   f) le condensateur de filtrage (C2) est un condensateur à découplage par bobine d'arrêt ou est monté en série avec une bobine de filtrage (L2); et
   g) les circuits d'absorption ainsi formés par phase du courant triphasé de la machine sont activement raccordés l'un à l'autre par leur extrémité qui n'est pas raccordée au conducteur triphasé (r, s, t).

2. Connexion de régime suivant la revendication 1, caractérisée en ce que la composante inductive de l'impédance totale à la fréquence nominale $(f_N)$ est inférieure à 20% de l'impédance de référence $(X_B)$.

3. Connexion de régime suivant l'une ou l'autre des revendications 1 et 2, caractérisée en ce que:
   a) la capacité du condensateur en série (C1) est comprise entre $4 \cdot S$ µF et $18 \cdot S$ µF,
   b) en particulier entre $8 \cdot S$ µF et $11 \cdot S$ µF, rapportée à une tension de 380 V, S étant la puissance apparente de la machine motrice en kVA.

4. Connexion de régime suivant l'une ou l'autre des revendications 1 à 3, caractérisée en ce que la capacité du condensateur de filtrage (C2) est inférieure à la capacité du condensateur en série (C1).

5. Connexion de régime suivant la revendication 4, caractérisée en ce que:
   a) la capacité du condensateur de filtrage (C2) est comprise entre $0,5 \cdot S$ µF et $7 \cdot S$ µF,
   b) en particulier entre $1,5 \cdot S$ µF et $3,5 \cdot S$ µF, rapportée à une tension de 380 V, S étant la puissance apparente de la machine motrice en kVA.

# EP 0 221 247 B1

## Claims

1. Operating circuit for a three-phase machine (5)
   a) with a static converter (1, 2, 3)
   b) with natural commutation
   c) which static converter is effectively connected at the output end via at least one three-phase line (r, s, t) and via at least one series capacitor (C1) per phase of a three-phase machine current to the three-phase machine, characterized in
   d) that the three-phase machine is an asynchronous machine (5);
   e) that per phase of the three-phase machine current at least one filter capacitor (C2) is provided which is effectively connected to the three-phase line (r, s, t) between the series capacitor (C1) and the output of the static converter (1, 2, 3);
   f) that the filter capacitor (C2) is an inductor-capacitor unit or connected in series with a filter choke (L2) and
   g) that these series resonant circuits formed in this manner are effectively connected to one another per phase of the three-phase machine current with their end not connected to the three-phase line (r, s, t).

2. Operating circuit according to Claim 1, characterized in that the inductive component of the total reactants is <20% of the reference impedance ($X_B$) at rated frequency ($f_N$).

3. Operating circuit according to one of Claims 1 or 2, characterized in
   a) that the capacitance of the series capacitor (C1) is in the range from $4 \cdot S$ µF to $18 \cdot S$ µF,
   b) particularly within the range from $8 \cdot S$ µF to $11 \cdot S$ µF, referred to a voltage of 380 V, S=apparent power of the drive machine in kVA.

4. Operating circuit according to one of Claims 1 to 3, characterized in that the capacitance of the filter capacitor (C2) is less than the capacitance of the series capacitor (C1).

5. Operating circuit according to Claim 4, characterized in that
   a) the capacitance of the filter capacitor (C2) is in the range from $0.5 \cdot S$ µF to $7 \cdot S$ µF,
   b) particularly within the range from $1.5 \cdot S$ µF to $3.5 \cdot S$ µF, referred to a voltage of 380 V, S=apparent power of the drive machine in kVA.

5

FIG. 1

FIG. 2

FIG. 3

EP 0 221 247 B1